# EUROPEAN PATENT APPLICATION

(11) **EP 2 884 149 A1**
(43) Date of publication of application: **17.06.2015**
(21) Application number: 13827868.4
(22) Date of filing: 07.08.2013
(51) Int. Cl.: F16L 59/04

(54) **AEROGEL MOLDED BODY, AEROGEL-CONTAINING PARTICLES, AND METHOD FOR PRODUCING AEROGEL MOLDED BODY**

(30) Priority: 09.08.2012 JP 2012177520
(71) Applicant: Panasonic Intellectual Property Management Co., Ltd., Osaka-shi, Osaka 540-6207 (JP)
(72) Inventor: HOSOI, Kenta, Osaka-shi, Osaka 540-6207 (JP); SHIBATA, Tetsuji, Osaka-shi, Osaka 540-6207 (JP); HIDAKA, Yasuhiro, Osaka-shi, Osaka 540-6207 (JP); IKOMA, Yoshimitsu, Osaka-shi, Osaka 540-6207 (JP)
(74) Representative: Müller-Boré & Partner Patentanwälte PartG mbB
(86) International application number: PCT/JP2013/004762
(87) International publication number: WO 2014/024482

(57) **Abstract**

An aerogel molded body **B** includes a plurality of aerogel particles **1** and adhesive **2** bonding the plurality of aerogel particles. The adhesive **2** includes layers of layer-forming adhesive **2a** covering the plurality of aerogel particles **1,** and particles of particle-forming adhesive **2b** adhering to the plurality of aerogel particles **1.** The layer-forming adhesive **2a** is preferably water-soluble adhesive **2.** The particle-forming adhesive **2b** is preferably powdery adhesive **2.** It is possible to obtain thermal insulators with increased strength and excellent thermal insulating properties.

## Description

### TECHNICAL FIELD

The present invention relates to an aerogel molded body available as a thermal insulator, an aerogel-containing particle useful for producing the aerogel molded body, and a method for producing the aerogel molded body.

### BACKGROUND ART

As thermal insulators, there have been known foam materials such as urethane foam and phenolic foam (foam-based thermal insulator). The foam materials exert the thermal insulating properties derived from their air bubbles generated by foaming. However, such urethane foam and phenolic foam typically have thermal conductivities higher than the thermal conductivity of the air. It is therefore of advantage to make the thermal conductivity of the thermal insulator be less than that of the air, for further improving the thermal insulating properties. As methods for achieving such thermal conductivities that are less than that of the air, there has been known a method of filling air-gaps of the foamed material (such as urethane foam and phenolic foam) with a gas having low thermal conductivities (e.g., chlorofluorocarbon), or the like. However, the method of filling air-gaps with the gas has a concern that the filled gas possibly leaks from the air-gaps over time, and which possibly causes increase in the thermal conductivities.

In recent years, there have been proposed vacuum-based methods for improving the thermal insulating properties. In the methods, for example, porous materials of calcium silicate and/or glass fibers are used and they are maintained at vacuum state of about 10 Pa. However, the vacuum-based thermal insulating methods require the maintenance of the vacuum state, and thus have problems in temporal deterioration and production cost. Moreover, in the thermal insulator based on the vacuum, the shape of the thermal insulator would be restricted because it needs to maintain the vacuum state, and its application field is thus severely limited. Accordingly, the thermal insulator based on the vacuum has been limited in practical use.

Incidentally there has been known an aggregate of fine porous silica (so-called aerogel) as a material for a thermal insulator that exerts the thermal conductivity lower than that of the air under ordinary pressure. This material can be obtained by methods disclosed in US 4402927, US 4432956, and US 4610863, for example. According to these methods, the silica aerogel can be produced by using alkoxysilane (which is also called "silicon alkoxide" and "alkyl silicate") as raw material. Specifically, silica aerogel can be obtained by: hydrolyzing the alkoxysilane under presence of solvent to produce wet gelled compound having silica skeleton as a result of condensation polymerization; and drying the wet gelled compound under supercritical condition, which is no less than a critical point, of the solvent. As the solvent, alcohol, liquefied carbon dioxide, and the like may be used, for example. Aerogel particles, which are particulate materials of the aerogel, have the thermal conductivity lower than that of the air, and thus are useful as raw materials for a thermal insulator.

### CITATION LIST

### PATENT LITERATURE

Patent Literature 1: US 4402927 A
Patent Literature 2: US 4432956 A
Patent Literature 3: US 4610863 A

### SUMMARY OF INVENTION

### TECHNICAL PROBLEM

However, since the aerogel particles are very lightweight, poor in strength and brittle, handling of the aerogel particles is difficult. Further, since the aerogel particles themselves are brittle, a body of a thermal insulator formed by molding the aerogel particles has a poor strength and is liable to crack and be broken. To increase the strength of the thermal insulator, it may be possible to add reinforcing material or the like or to increase the amount of adhesive, but in this case, the added reinforcing material or the increased amount of adhesive possibly causes decrease in the thermal insulating properties of the thermal insulator. In view of the above circumstances, it is required to achieve both requirements of sufficient strength and thermal insulating properties by increasing the strength of the aerogel particles and molded products thereof while preventing deterioration in thermal insulating properties.

The present invention has been made in view of the above circumstances, and an object thereof is to propose an aerogel molded body which is higher in strength and is excellent in thermal insulating properties, an aerogel-containing particle useful for producing such an aerogel molded body, and a method for producing such an aerogel molded body.

### SOLUTION TO PROBLEM

An aerogel molded body according to the present invention includes a plurality of aerogel particles, and the adhesive bonding the plurality of aerogel particles. The adhesive includes layers of layer-forming adhesive covering the plurality of aerogel particles, and particles of particle-forming adhesive adhering to the plurality of aerogel particles.

In the aerogel molded body, it is preferable that the layer-forming adhesive be water-soluble adhesive and the particle-forming adhesive be powdery adhesive.

In the aerogel molded body, it is preferable that the layer-forming adhesive be water-soluble phenolic resin adhesive, and the particle-forming adhesive be phenolic resin adhesive.

In the aerogel molded body, it is preferable that a ratio by mass of solid content of the layer-forming adhesive to solid content of the particle-forming adhesive (layer-forming adhesive: particle-forming adhesive) fall within a range of 4:1 to 3:2.

In the aerogel molded body, it is preferable that the layers of the layer-forming adhesive have a thickness of 1 to 10 µm, and the particles of the particle-forming adhesive have an average particle size of 10 to 500 µm.

The aerogel-containing particle according to the present invention is for forming the above aerogel moulded body and is characterized by including of an aerogel particle, at least one layer of layer-forming adhesive covering the aerogel particle and at least one particle of particle-forming adhesive adhering to the aerogel particle.

The method for producing the aerogel molded body according to the present invention is characterized by including: an aerogel-containing particle preparation step of preparing a plurality of aerogel-containing particles by coating the plurality of aerogel particles with the layer-forming adhesive and attaching the particle-forming adhesive to the plurality of aerogel particles; and an aerogel particle bonding step of bonding the plurality of aerogel particles with the adhesive by heating the plurality of aerogel-containing particles at a temperature which does not cause spreading of the particle-forming adhesive.

### ADVANTAGEOUS EFFECTS OF INVENTION

According to the aerogel molded body of the present invention, aerogel particles are bonded with adhesive including layer-forming adhesive and particle-forming adhesive, and thereby it is possible to obtain a thermal insulator with increased strength and excellent thermal insulating properties.

According to the aerogel-containing particle of the present invention, the aerogel particles are covered with the layer-forming adhesive and the particle-forming adhesive adheres to the aerogel particles, and thereby it is possible to obtain a thermal insulator with increased strength and excellent thermal insulating properties.

According to the method for producing the aerogel molded body according to the present invention, the aerogel-containing particles each including the layer-forming adhesive and the particle-forming adhesive are bonded together, and thereby it is possible to obtain a thermal insulator with increased strength and excellent thermal insulating properties.

### BRIEF DESCRIPTION OF DRAWINGS

**FIGS. 1A** and **1B** illustrate an example of an aerogel molded body, **FIG. 1A** is a schematic view illustrating a face which appears when the molded body is cut and
**FIG. 1B** is a schematic view illustrating a face which appears when the molded body is broken.
**FIG. 2** is a schematic view illustrating an example of aerogel-containing particles.
**FIG. 3A** is a schematic view illustrating an example of producing of the aerogel-containing particles, and **FIGS. 3B** and **3C** are schematic views each illustrating an example of the aerogel-containing particles which are produced.
**FIG. 4** is a schematic view illustrating an example of producing of the aerogel-containing particles.
**FIG. 5A** is s a schematic view illustrating an example of producing of the aerogel-containing particles, and **FIGS. 5B** and **5C** are schematic views each illustrating an example of the aerogel-containing particles which are produced.
**FIGS. 6A** to **6D** are schematic views illustrating an example of producing of the aerogel molded body.
**FIGS. 7A** to **7C** are schematic diagrams each illustrating an example of the aerogel particle.
**FIG. 8** is an electronic microscope photograph of the aerogel particle.
**FIG. 9** is a graph showing change of a property of the aerogel molded body in accordance with a ratio of powdery adhesive and liquid adhesive included in the aerogel molded body.
**FIGS. 10A** to **10F** are optical microscope photographs, **FIG. 10A** illustrates the aerogel molded body, **FIG. 10B** illustrates the aerogel molded body which is formed by use of liquid adhesive only, **FIG. 10C** illustrates the aerogel molded body which is formed by use of powdery adhesive only, **FIG. 10D** illustrates the aerogel particle, **FIG. 10E** illustrates powdery adhesive before molding, and **FIG. 10F** illustrates the powdery adhesive after molding.

### DESCRIPTION OF EMBODIMENTS

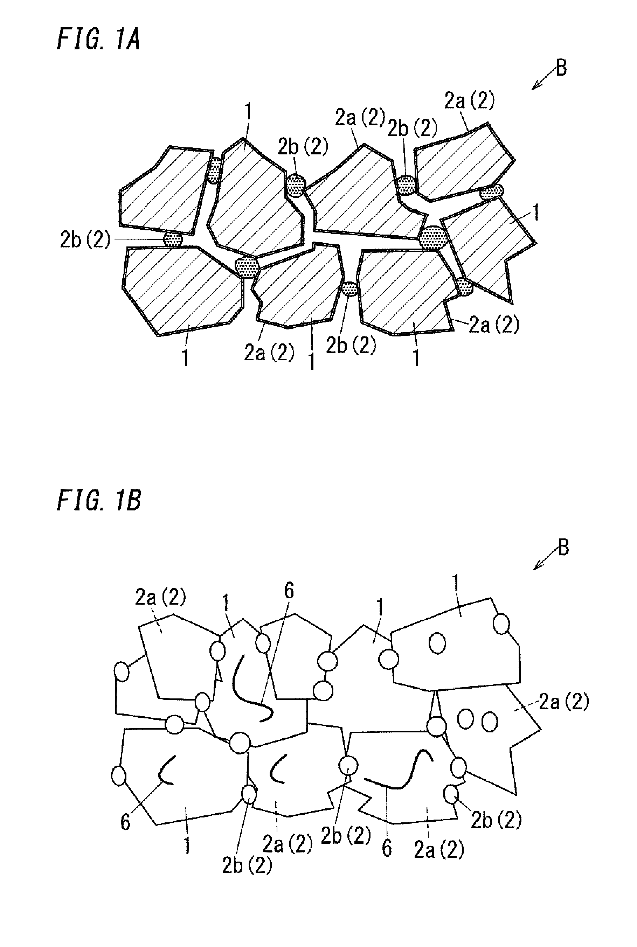

The aerogel molded body according to the present invention is exemplified by an aerogel molded body **B** formed by bonding a plurality of aerogel particles **1** with adhesive **2.** The adhesive **2** includes layers of layer-forming adhesive **2a** covering the aerogel particles **1** and particles of particle-forming adhesive **2b** adhering to the aerogel particles **1.** **FIGS. 1A** and **1B** are schematic views each illustrating an example of the aerogel molded body **B.** **FIG. 1A** illustrates a face which appears when the aerogel molded body **B** is cut, and **FIG. 1B** illustrates a face which appears when the aerogel molded body **B** is broken. **FIG. 1A** illustrates internal structures of the particles as if they have been cut. **FIG. 1B** illustrates surfaces of the particles without cut.

Aerogel is a porous material (porous body) and is obtained by drying a gel so as to substitute the solvent included in the gel for a gas. Particulate material of the aerogel is called aerogel particle. Known examples of the aerogel include silica aerogel, carbon aerogel, and alumina aerogel, and the silica aerogel is preferably used among them. The silica aerogel is excellent in thermal insulating properties, is easy to produce, and is low in producing cost, and thus is easy to obtain compared to other kind of aerogels. Note that, materials which are produced as a result of full evaporation of solvent in gel and have mesh structures with air gaps may be called "xerogel", but the aerogel of the present specification may include the xerogel.

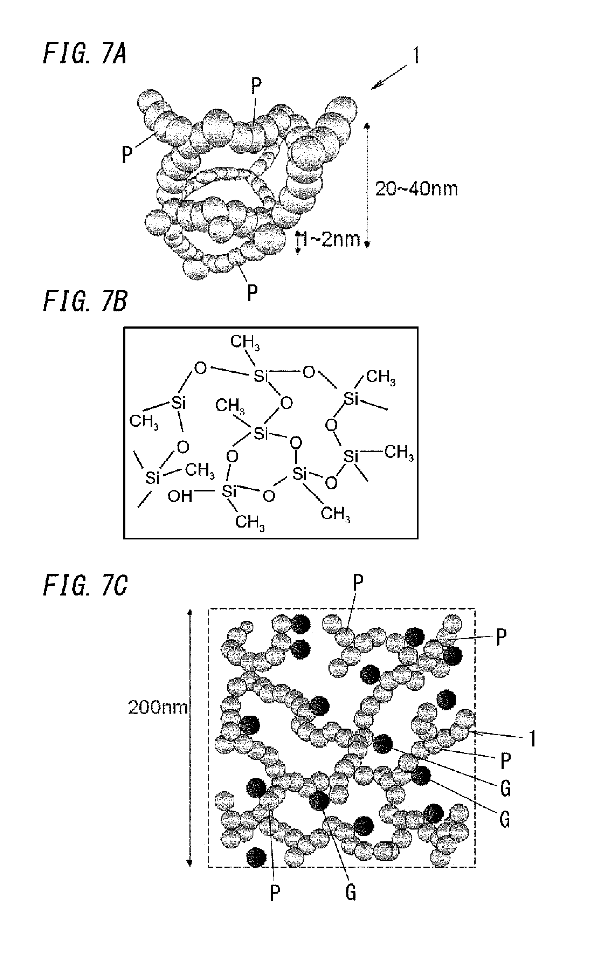

**FIGS. 7A** to **7C** show schematic diagrams of an example of the aerogel particle. As shown in **FIGS. 7A** and **7B****,** the aerogel particle **1** is a silica aerogel particle, and is a silica (SiO₂) structure having pores of which size being about several tens of nanometers (in a range of 20 to 40 nm, for example). Such aerogel particles **1** can be obtained by a supercritical drying or the like. An aerogel particle **1** is constituted by fine particles **P** (silica microparticles) that are bound to each other so as to form a three dimensional mesh shape. Size of one silica microparticle is, for example, about **1** to 2 nm. As shown in **FIG. 7C****,** gases **G** are allowed to enter the pores, of which sizes are about several tens of nanometers, of the aerogel particle **1.** These pores block the transfer of the components of the air such as nitrogen and oxygen, and accordingly it is possible to reduce the thermal conductivities to the extent less than that of the air. For example, a conventional thermal insulator provided with the air has a thermal conductivity (WLF) λ of 35 to 45 mW/mK, but a thermal conductivity (WLF) λ of a thermal insulator can be reduced to about **9** to **12** mW/mK by the aerogel particles **1.** Typically, aerogel particles 1 have hydrophobic properties. For example, in the silica aerogel particle shown in **FIG. 7B****,** most of silicon atoms (Si) are bound to alkyl group(s), and a small number of them are bound to hydroxyl group(s) (OH). This silica aerogel particle therefore has a comparatively low surface polarity.

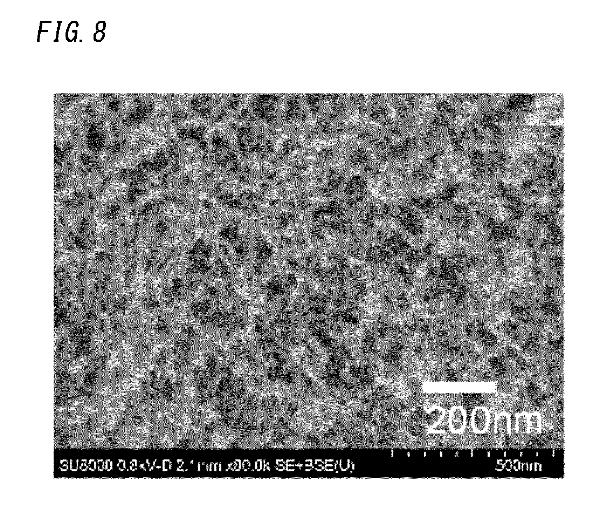

**FIG. 8** is an electron micrograph of a silica aerogel particle. This silica aerogel particle was obtained by a supercritical drying method. It can also be understood from this graph that a silica aerogel particle has a three-dimensional steric mesh structure. The mesh structure of an aerogel particle **1** is typically formed of linearly bound silica microparticles having a size of less than 10 nm. Note that, the mesh structure may have ambiguous boundaries between microparticles, and some part of the mesh structure may be formed of linearly extended silica structures (-O-Si-O-).

The aerogel particles for the aerogel molded body are not limited particularly, and it is possible to use the aerogel particles obtained by a commonly-used producing method. Typical examples of the aerogel particles include: aerogel particles obtained by the supercritical drying method; and aerogel particles obtained based on liquid glass.

The aerogel particles obtained by the supercritical drying method can be obtained by: preparing silica particles by polymerizing raw material by the sol-gel method which is a liquid phase reaction method; and removing the solvent thereof by the supercritical drying. For example, alkoxysilane (which is also called "silicon alkoxide" or "alkyl silicate") is used as the raw material. The alkoxysilane is hydrolyzed under presence of solvent to generate a wet gelled compound having silica skeleton as a result of condensation polymerisation, and thereafter the wet gelled compound is dried under supercritical condition in which a temperature and a pressure are equal to or more than those of a critical point of the solvent. The solvent may be alcohol, liquefied carbon dioxide or the like. According to the drying of the gel compound under the supercritical condition, the solvent thereof is removed while the mesh structure of the gel is maintained, and as a result the aerogel can be obtained. Aerogel particles, which are particulate materials of the aerogel, can be obtained by pulverizing the solvent-including gel into particles, and thereafter drying the particles of the solvent-including gel by the supercritical drying. Alternatively, aerogel particles can be obtained by pulverizing a bulk body of aerogel obtained as a result of the supercritical drying.

The alkoxysilane as the raw material of the aerogel particles is not limited particularly, but may be bifunctional axkoxysilane, trifunctional alkoxysilane, tetrafunctional axkoxysilane, or a combination of them. Examples of the bifunctional alkoxysilane include dimethyldimethoxysilane, dimethyldiethoxysilane, diphenyldiethoxysilane, diphenyldimethoxysilane, methylphenyldiethoxysilane, methylphenyldimethoxysilane, diethyldiethoxysilane, and diethyldimethoxysilane. Examples of the trifunctional alkoxysilane include methyltrimethoxysilane, methyltriethoxyilane, ethyltrimethoxysilane, ethyltriethoxysilane, phenyltrimethoxysilane, and phenyltriethoxysilane. Examples of the tetrafunctional alkoxysilane include tetramethoxysilane, and tetraethoxysilane. Bis(trimethylsilyl)methane, bis(trimethylsilyl)ethane, bis(trimethylsilyl)hexane, or vinyltrimethoxysilane may be used as the alkoxysilane. Partial hydrolysate of the alkoxysilane may be used as the raw material.

The hydrolysis and the condensation polymerization of the alkoxysilane are preferably performed under presence of water, and more preferably performed under presence of a mixed liquid of water and organic solvent which the alkoxysilane is soluble in and is compatible with water. Use of such a mixed liquid as the solvent makes it possible to perform the hydrolysis process and the condensation polymerization process in succession, and accordingly the gel can be obtained efficiently. In this process, the polymer is generated as a gelled substance (wet gel) exists in the solvent as dispersion medium. The solvent which the alkoxysilane is soluble in and is compatible with water is not limited particularly. Examples of such a solvent include: alcohol such as methanol, ethanol, propanol, isopropanol and butanol; acetone; and N,N-dimethylformamide. These materials may be used alone or in combination.

It is also preferable that the hydrolysis and the condensation polymerisation of the alkoxysilane be performed under presence of catalyst which causes to desorb the alkoxy group from the alkoxysilane to facilitate the condensation reaction. Examples of such a catalyst include acidic catalyst and basic catalyst. Specifically, examples of the acidic catalyst include hydrochloric acid, citric acid, nitric acid, sulfuric acid, and ammonium fluoride. Examples of the basic catalyst include ammonia and piperidine.

An appropriate component may be added to the reaction solution of the alkoxysilane. Examples of such a component may include a surface-activating agent and a functional group induction agent. Such an additional component can provide a favorable function on the aerogel particles.

The aerogel can be obtained by drying the obtained wet gel by the supercritical drying. It is preferable that the wet gel be firstly cut or pulverized into particles to prepare the particles of the solvent including-gel, and thereafter the particles of the gel be dried by the supercritical drying. By doing so, the aerogel can be made into particles and dried without fracturing aerogel structure, and accordingly aerogel particles can be obtained easily. In this case, it is preferable to prepare the particles of gel in uniform size, and which enables the aerogel particles to be equalized in size. Alternatively, the aerogel particles may be obtained by preparing a bulk aerogel, and thereafter pulverizing the bulk body of aerogel by a pulverizing device. The obtained aerogel particles may be sieved or classified so as to give aerogel particles with more equal sizes. When sizes of aerogel particles are equalized, handle ability can be improved and it is possible to easily obtain a stable body.

The aerogel particles obtained based on the liquid glass can be produced by an ordinary pressure drying method that includes sequential processes of a preparation process of silica sol, a gelling process of the silica sol, a ripening process, a pulverizing process of the gel, a solvent substitution process, a hydrophobizing process and a drying process. The liquid glass generally may be a high concentration aqueous solution of mineral silicate such as sodium silicate, and can be obtained by dissolving the mineral silicate in the water and heating it, for example.

The raw material of the silica sol may be silicate alkoxide, silicate of alkaline metal, or the like. Examples of the silicate alkoxide include tetramethoxysilane and tetraethoxysilane. The alkoxysilane described in the explanation regarding the supercritical drying method can be used as the silicate alkoxide. The silicate of alkaline metal may be potassium silicate, sodium silicate or the like. It is preferable to use the silicate of alkaline metal because it is inexpensive, and it is more preferable to use the sodium silicate because it is easily available.

In a case of using the silicate of alkaline metal, silica sol can be prepared by a method using a deacidification with an inorganic acid such as hydrochloric acid and sulfuric acid, or a method using a cation exchange resin having counter ion ofH+. Among these methods, it is preferable to use a cation exchange resin.

The silica sol can be prepared by using an acid type cation exchange resin by passing a solution of silicate of alkaline metal having a proper concentration through a packed layer filled with the cation exchange resin. Alternatively, the silica sol can be prepared by: introducing a cation exchange resin into a solution of silicate of alkaline metal; mixing them; removing the alkaline metal; and thereafter removing the cation exchange resin by, for example, filtering. The amount of the cation exchange resin is preferably no less than an amount required to exchange the alkaline metal included in the solvent. The solvent is subject to dealkalization (demetallation) by the cation exchange resin.

The acid type cation exchange resin may be styrene-based one, acrylic-based one, or methacryl-based one, and have a replaced sulfonic acid group or carboxyl group as the ion-exchange group, for example. Among them, it is preferable to use, so-called strong acid type cation exchange resin provided with the sulfonic acid group. The cation exchange resin used for the exchange of the alkaline metal can be reused after regeneration process by passing sulfuric acid or hydrochloric acid therethrough.

The prepared silica sol is thereafter gelled, and then which is ripened. In the gelling process and the ripening process, it is preferable to control the pH thereof. Typically, the silica sol after the ion exchange process by the cation exchange resin has a comparatively low pH of, for example, 3 or less. When such a silica sol is neutralized so that the pH thereof is in a pH range of mild acidity to neutrality, the silica sol is gelled. The silica sol can be gelled by controlling the pH thereof into a range of 5.0 to 5.8, and preferably into a range of 5.3 to 5.7. The pH thereof can be controlled by adding base and/or acid. The base may be aqueous ammonia, sodium hydroxide, potassium hydroxide, silicate of alkaline metal, or the like. The acid may be hydrochloric acid, citric acid, nitric acid, sulfuric acid, or the like. The pH-controlled gel is ripened in a stable state. The ripening process may be performed under a temperature in a range of 40 to 80°C for a time period of 4 to 24 hour.

After the ripening process, preferably, the gel is pulverized. Desired aerogel particles can be easily obtained by the pulverisation of the gel. The pulverizing process of the gel can be performed, for example, by: putting the gel in a Henshall type mixer or gelling the sol inside the mixer; and operating the mixer at a proper rotating speed for a proper period.

After the pulverizing process, preferably, the solvent substitution process is performed. In the solvent substitution process, the solvent (such as water) used for preparing the gel is substituted for another solvent having small surface tension in order to avoid the occurrence of drying shrinkage when the gel is dried. The solvent substitution process typically includes multiple steps, and preferably, two steps, because it is difficult to directly substitute water for the solvent having small surface tension. A criterion for selecting a solvent used for the first step may include: having good affinity with both water and a solvent used for the second step. The solvent used for the first step may be methanol, ethanol, isopropyl alcohol, acetone or the like, and ethanol is preferable. A criterion for selecting a solvent used for the second step may include: having less reactivity with a treatment agent used in a following hydrophobizing process and having small surface tension so as to cause less drying shrinkage. The solvent used for the second step may be hexane, dichloromethane, methyl ethyl ketone or the like, and hexane is preferable. An additional solvent substitution step(s) may be performed between the first solvent substitution step and the second solvent substitution step, as needed.

After the solvent substitution process, preferably, the hydrophobizing process is performed. Alkylalkoxysilane, halogenated alkylsilane, or the like can be used for a treatment agent in the hydrophobizing process. For example, dialkyldichlorosilane or monoalkyl trichlorosilane can be used preferably, and dimethildichlorosilane is used more preferably in view of the reactivity and the material cost. The hydrophobizing process may be performed before the solvent substitution process.

After the hydrophobizing process, the obtained gel is isolated from the solvent by filtering, and thereafter the gel is washed to remove the unreacted treatment agent. Thereafter, the gel is dried. The drying process may be performed under the ordinary pressure, and may be performed with heat and/or hot air. The drying process is preferably performed under an inert gas (e.g., nitrogen gas) atmosphere. According to this process, the solvent in the gel is removed from the gel, and thus the aerogel particles can be obtained.

The aerogel particles obtained by the supercritical drying method and the aerogel particles obtained based on the liquid glass have basically the same structure. That is, each of them has a particle structure in which silica microparticles are bound together so as to form a three dimensional mesh shape.

Shape of the aerogel particle is not particularly limited, and may be one of various shapes. Typically, the aerogel particles obtained by the above-mentioned method have indeterminate shapes because the aerogel particles are subject to the pulverizing process or the like. They may be, so to say, in a ruck-shape having irregular surface. They also may be in a spherical-shape, a rugby-ball shape, a panel-shape, a flake-shape, a fiber-shape, or the like. The aerogel particles used for the molding may be a mixture of particles having different particle sizes. The sizes of the aerogel particles are not necessarily in uniform, because the particles are adhered to each other to be unified in the molded body. Regarding a size of the aerogel particles, a maximum length of the particles may fall within a range of 50 nm to 10 mm. In view of handleability and ease for molding, however, it is preferable that excessively large particles and excessively small particles be not mixed. To that end, it may be possible to set the size of the aerogel particles to a specific appropriate one. For example, the aerogel particles may be such micron-order particles that a maximum length of the aerogel particles may fall within a range of equal to or more than 1 µm and less than 1 mm. Alternatively, the aerogel particles may have a size of approximately 1 mm that a maximum length of the aerogel particles falls within a range of equal to or more than 100 µm and less than 5 mm. Alternatively, the aerogel particles may be such mm-order particles that a maximum length of the aerogel particles falls within a range of equal to or more than 1 mm and less than 10 mm.

It is preferable that the average particle size of the aerogel particles fall within a range of equal to or more than 50 µm and equal to or less than 10 mm. The average particle size of the aerogel particle falling within this range can cause further improvement of adhesiveness and thermal insulating properties. It is more preferable that the average particle size of the aerogel particles fall within a range of equal to or more than 100 µm and equal to or less than 5 mm. It is further preferable that the average particle size of the aerogel particles fall within a range of equal to or more than 300 µm and equal to or less than 3 mm. The much further preferable range of the average particle size of the aerogel particles is exemplified by a range of 500 µm to 1.5 mm.

In the aerogel molded body according to the present invention, the aerogel particles described above are bonded to each other with the adhesive.

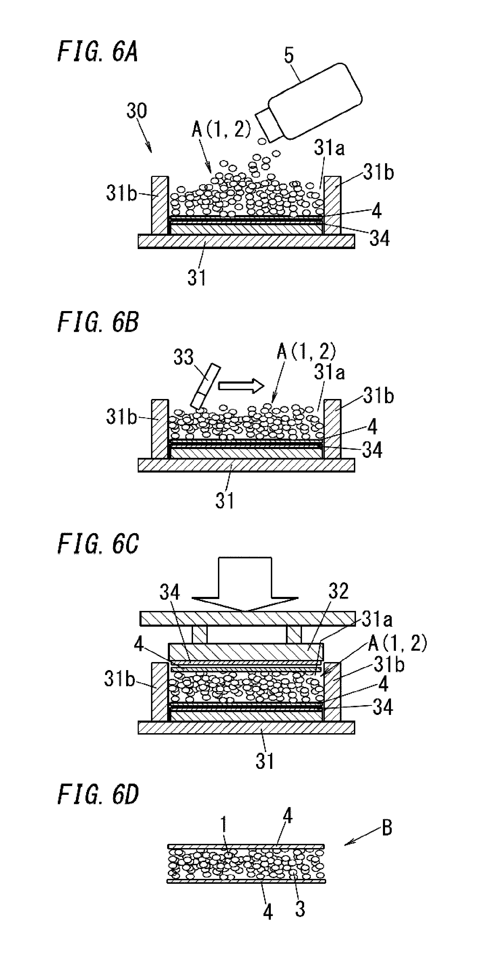

**FIG. 6D** shows an example of the embodiment of the aerogel molded body **B.** The aerogel molded body **B** is constituted by a molded product (aerogel layer 3) of the aerogel particles **1** and a surface sheet **4.** In this aspect, the aerogel molded body **B** is formed as a board-shaped thermal insulator (thermal insulating board). Note that, by molding with a proper molding tool or the like, the aerogel molded body **B** can be formed into a shape other than a board shape. The aerogel molded body **B** has a structure where the surface sheets **4** are respectively placed on opposite surfaces of the aerogel layer 3 formed by bonding the aerogel particles **1.** By covering the aerogel layer 3 with the surface sheets **4,** it is possible to increase the strength of the aerogel molded body **B.** The surface sheet 4 may be placed on only one of opposite surfaces of the aerogel layer **3,** but it is preferable that the surface sheets **4** be placed on the respective opposite surfaces of the aerogel layer **3** for increase of strength. Note that, the surface sheet **4** is optional, and may be omitted. The shape of the aerogel molded body **B** is, preferably, a board-like shape suitable for use as building material, but is not limited thereto. The thermal insulator B can be formed into a desired shape depending on the intended use. A thickness of the thermal insulator B (dimension in a stacking direction of the aerogel layer **3** and the surface sheets **4)** can be appropriately determined depending on desired thermal insulating properties and the intended use, and may be in a range of 0.1 to 100 mm, for example. In **FIG. 6D****,** the adhesive **2** is omitted.

The aerogel layer **3** is formed by bonding the plurality of aerogel particles **1** together with the adhesive **2.** From the point of view of reducing the thermal conduction, it is preferable that the adhesive **2** have comparatively small thermal conductivity. From the point of view of increasing reinforcing effects, it is preferable that the adhesive **2** have greater adhesion strength.

It is preferable that the adhesive **2** be prevented from intruding into fine pores of the aerogel particles **1.** When the adhesive **2** intrudes into the fine pores of the aerogel particles **1,** this intruding adhesive **2** may increase the thermal conductivities of the aerogel particles **1** to cause deterioration in thermal insulating properties. Further, the adhesive **2** may cover core particles so as not to close fine pores of the aerogel particles **1** wherever possible. When closing of fine pores of the aerogel particles **1** is prevented, it becomes easy to incorporate gas into aerogel structure and thereby thermal insulating properties can be improved. For example, in a case where the adhesive **2** in the form of liquid is used, when, promptly after mixing the aerogel particles **1** and the adhesive **2,** a mixture thereof is dried, it becomes easy to prevent the adhesive **2** from intruding into the fine pores, and perform covering so as not to close the fine pores. In a case where the adhesive **2** in the form of a solid is used, when solid particles each having a larger size than the size of the fine pores are used, such larger particles cannot intrude into fine pores, and thereby it becomes easy to perform attachment of the adhesive **2** so as to prevent the adhesive **2** from intruding into the fine pores and so as not to close the fine pores.

As illustrated in **FIG. 1****,** adjacent aerogel particles 1 are bonded to each other with the adhesive **2.** The aerogel particles **1** are covered with the layer-forming adhesive **2a** and the particle-forming adhesive **2b** is attached to the aerogel particles 1. The layer-forming adhesive **2a** and the particle-forming adhesive **2b** have adhesiveness. That is, adhesive bonding is performed at a contact point between the layer of the layer-forming adhesive **2a** and the further layer of the layer-forming adhesive **2a** and at a contact point between the layer of the layer-forming adhesive **2a** and the particle of the particle-forming adhesive **2b.** Note that adhesive bonding may be performed at a contact point between the particle of the particle-forming adhesive **2b** and the further particle of the particle-forming adhesive **2b,** at a contact point between the layer of the layer forming adhesive **2a** and the aerogel particle 1, and at a contact point between the particle of the particle-forming adhesive **2b** and the aerogel particle **1.**

In FIG. 1, the aerogel particles **1** are illustrated as particles having indeterminate shapes, but the figure is merely schematic. In the practical aerogel molded body B, the aerogel particles **1** may be one of various shapes. What is needed is that the particle-forming adhesive **2b** is segmented into like particles, but not bonded so as to be placed linearly between the aerogel particles 1. For example, the particles of the particle-forming adhesive **2b** may be arranged like dots or like islands.

In FIG. **1B****,** grooves **6** formed in the surfaces of the aerogel particles 1 are shown. In a case where the aerogel particles **1** are powder having indeterminate shape, there is a possibility that the grooves **6** are formed. The grooves **6** may be formed by splitting of part of the surfaces of the aerogel particles. The grooves **6** may be formed by recessed part of the surfaces of the aerogel particles. The grooves **6** may be hollows in the surfaces of the aerogel particles 1. By making an observation on the aerogel particles 1, the grooves **6** can be seen.

The particles of the particle-forming adhesive **2b** may be placed dispersedly in the aerogel molded body **B.** The particles of the particle-forming adhesive **2b** are placed between the aerogel particles **1** adjacent to each other. The aerogel molded body **B** can be formed by closely-packing the plurality of aerogel particles **1,** and gaps are formed between the plurality of aerogel particles **1** in this structure. The particles of the particle-forming adhesive **2b** may be placed in the gaps between the plurality of aerogel particles **1.**

The layers of the layer-forming adhesive **2a** may cover the surfaces of the aerogel particles **1.** The layers of the layer-forming adhesive **2a** may cover whole of each of the aerogel particles **1.** Alternatively, layers of the layer-forming adhesive **2a** may partially cover each of the aerogel particles **1.** In a case where layers of the layer-forming adhesive **2a** partially covers each of the aerogel particles 1, for example, the covered area may be set to 30% or more, or 50% or more, but not limited to this. It is preferable that the covered area be 60% or more. An upper limit of the covered area may be 100%.

It is preferable that the layer-forming adhesive **2a** be water-soluble adhesive. By using water-soluble adhesive, it is possible to easily form a layer of the adhesive on the surfaces of the aerogel particles 1. Note that water solubility of the layer-forming adhesive **2a** means that the layer-forming adhesive **2a** has water solubility before molding of the aerogel particles. After the molding, it is preferable that the layer-forming adhesive **2a** be not dissolved in water. Thereby, it is possible to enhance water resistance of the aerogel molded body B. It is preferable that molding cause curing of the layer-forming adhesive **2a.**

It is possible to use an appropriate component with adhesiveness as material of the layer-forming adhesive **2a.** It is possible to use a component of so-called adhesive (binder). As the layer-forming adhesive **2a,** it is possible to use material including either thermosetting resin or thermoplastic resin. The layer-forming adhesive **2a** may be made of thermosetting resin only. Alternatively, the layer-forming adhesive **2a** may be made of thermoplastic resin only. Note that, the layer-forming adhesive **2a** may include appropriate additive in addition to either one of thermosetting resin and thermoplastic resin.

It is preferable that the layer-forming adhesive **2a** be thermosetting resin. Thereby, it is possible to increase strength of the aerogel molded body B. Examples of the layer-forming adhesive **2a** include epoxy resin, phenolic resin, acrylic resin, melamine resin, silicon resin, polyethylene, polypropylene, degenerated resin thereof, and the like. It is preferable that these materials be water-soluble.

It is preferable that the layer-forming adhesive **2a** be water-soluble phenolic resin adhesive. By using water-soluble phenolic resin adhesive, it is possible to easily cover the aerogel particles **1** with the layer thereof and increase strength of the aerogel molded body B.

It is preferable that molecular weight of the layer-forming adhesive **2a** be 100 to 500. Thereby, it is possible to more easily form a layer of the adhesive. Further, it is possible to improve water solubility. This molecular weight may be molecular weight of a monomer of the layer-forming adhesive **2a** which has not cured yet. The molecular weight of the layer-forming adhesive **2a** can be measured by molecular weight analysis. The molecular weight of the layer-forming adhesive **2a** can be measured by specifying a monomer in a molded body. It is more preferable that the molecular weight of the layer-forming adhesive **2a** be 150 to 200.

It is preferable that the particle-forming adhesive **2b** is powdery adhesive. By using such powdery adhesive, it is possible to easily attach the particles of the adhesive **2** to the surfaces of the aerogel particles **1.** Note that, the particle-forming adhesive **2b** in powder form means that, before molding the aerogel particles **1,** the particle-forming adhesive **2b** is powdery. After molding, the particle-forming adhesive **2b** is not required to be powder and preferably bonds the aerogel particles **1** adjacent to each other. Thereby, it is possible to increase the strength of the aerogel molded body **B.**

It is possible to use an appropriate component with adhesiveness as material of the particle-forming adhesive **2b.** It is possible to use a component of so-called adhesive (binder). It is possible to use material including either thermosetting resin or thermoplastic resin as the particle-forming adhesive **2b.** The particle-forming adhesive **2b** may be made of thermosetting resin only. Alternatively, the layer-forming adhesive **2b** may be made of thermoplastic resin only. Note that, the particle-forming adhesive **2b** may include appropriate additive in addition to either one of thermosetting resin and thermoplastic resin.

It is preferable that the particle-forming adhesive **2b** is thermosetting resin. Thereby, it is possible to increase the strength of the aerogel molded body **B.** Examples of the particle-forming adhesive **2b** include epoxy resin, phenolic resin, acrylic resin, melamine resin, silicon resin, polyethylene, polypropylene, degenerated resin thereof, and the like. These materials may be powder.

It is preferable that the particle-forming adhesive **2b** be phenolic resin adhesive. By using phenolic resin adhesive, it is possible to tightly bond the aerogel particles **1** at point-like contracts and accordingly it is possible to improve thermal insulating properties and increase strength.

The particle-forming adhesive **2b** may be made of resin adhesive without water-solubility. Thereby, it is possible to keep the shape of the particles of the particle-forming adhesive **2b** on the surfaces of the aerogel particles **1.** The particle-forming adhesive **2b** may be non-water-soluble. The particle-forming adhesive **2b** may have hydrophobic properties. For example, the particle-forming adhesive **2b** may be made of non-water-soluble phenolic resin adhesive. It is considered that in a case where the layer-forming adhesive **2a** is water-soluble and the particle-forming adhesive **2b** is non-water-soluble or hydrophobic, the particle-forming adhesive **2b** attached to the layer-forming adhesive **2a** is repelled by the layer-forming adhesive **2a** when melted by molding, and thereby the shape of the particles of the particle-forming adhesive **2b** is likely to be kept.

It is preferable that the molecular weight of the particle-forming adhesive **2b** be greater than the molecular weight of the layer-forming adhesive **2a**. By doing so, it is possible to facilitate covering with the layers of the layer-forming adhesive **2a** and attachment of the particles of the particle-forming adhesive **2b.** The molecular weight of the particle-forming adhesive **2b** may be twice or more greater than the molecular weight of the layer-forming adhesive **2a.** The molecular weight of the particle-forming adhesive **2b** may be ten times or less than the molecular weight of the layer-forming adhesive **2a.**

It is preferable that the molecular weight of the particle-forming adhesive **2b** be 400 to 1000. Thereby, it is possible to more easily form the particles of the adhesive. Further, it is possible to improve the adhesiveness. This molecular weight may be molecular weight of a monomer of the particle-forming adhesive **2b** which has not cured yet. The molecular weight of the particle-forming adhesive **2b** can be measured by molecular weight analysis. The molecular weight of the particle-forming adhesive **2b** can be measured by specifying a monomer in a molded body which has cured. It is more preferable that the molecular weight of the particle-forming adhesive **2b** be 500 to 600.

It is preferable that a ratio by mass of solid content of the layer-forming adhesive **2a** to solid content of the particle-forming adhesive **2b** (layer-forming adhesive: particle-forming adhesive) falls within a range of 4:1 to 3:2. When the ratio by mass of the layer-forming adhesive **2a** and the particle-forming adhesive **2b** falls within this range, it is possible to improve both of thermal insulating properties and strength.

The layer-forming adhesive **2a** and the particle-forming adhesive **2b** may cause a curing reaction. In such case, bonding at the contact point of the layer-forming adhesive **2a** and the particle-forming adhesive **2b** is strengthened, and accordingly it is possible to improve strength. For example, when both the layer-forming adhesive **2a** and the particle-forming adhesive **2b** are made of a same type of resin, a mutual curing reaction can occur. Examples of the same type of resin include phenolic resin.

It is possible to distinguish between the layer-forming adhesive **2a** and the particle-forming adhesive **2b** in the aerogel molded body **B** by optical microscopic observation. The layer-forming adhesive **2a** and particle-forming adhesive **2b** are distinguishable based on the difference in color therebetween. For example, the particle-forming adhesive **2b** shows a brighter color than surrounding area. For example, the layer-forming adhesive **2a** disposed on the groove **6** shows a darker color than surrounding area. Specifically, in a case where a lamp to produce yellow light is used, the particle-forming adhesive **2b** shines, and the groove **6** is brownish.

It is preferable that a thickness of the layer-forming adhesive **2a** be 1 to 10 µm. This facilitates covering around the aerogel particles and, as a result, it is possible to increase the strength of the aerogel molded body **B.** Note that the thickness of the layer-forming adhesive **2a** means a thickness of the layer of the layer-forming adhesive **2a.**

It is preferable that the particles of the particle-forming adhesive **2b** have an average particle size of 10 to 500 µm. This facilitates attachment of the particles of the aerogel particles 1 and, as a result, it is possible to increase the strength of the aerogel molded body B and improve thermal insulating properties of the aerogel molded body B. It is more preferable that the particles of the particle-forming adhesive **2b** have an average particle size of 50 to 400 µm. It is further preferable that the particles of the particle-forming adhesive **2b** have an average particle size of 100 to 300 µm.

It is preferable that a ratio of an average particle size of the particles of the particle-forming adhesive **2b** and an average particle size of the aerogel particle 1 (particle-forming adhesive/aerogel particle) falls within a range of 1/200 to 1/10. By doing so, it is possible to easily improve the thermal insulating properties and the strength.

An average particle size of the aerogel particle 1, an average particle size of the particles of the particle-forming adhesive **2b** and a thickness of the layer of the layer-forming adhesive **2a** can be measured, for example, by analyzing the aerogel molded body B by the X-ray CT method. This average particle size is defined as a diameter of a true circle corresponding to a sectional area. For example, the average particle size of the aerogel particle **1** and the average particle size of the particles of the particle-forming adhesive **2b** can be obtained based on an average value of one hundred particles of the aerogel particles **1** and the particle-forming adhesive **2b,** respectively. Further, at a stage of material prior to molding, the average particle size of the aerogel particle **1** and the average particle size of particles of the particle-forming adhesive **2b** may be obtained using a laser diffraction particle size distribution measuring device.

The above aerogel molded body **B** can be formed by using the aerogel-containing particle A for forming the aerogel molded body **B.** The aerogel-containing particle **A** includes the aerogel particle 1, at least one layer of the layer-forming adhesive **2a** covering the aerogel particle 1, and at least one particle of the particle-forming adhesive **2b** adhering to the aerogel particle 1. By using the aerogel-containing particle A including the at least one layer of the layer-forming adhesive **2a** and the at least one particle of the particle-forming adhesive **2b** as the adhesive **2,** it is possible to tightly bond the aerogel particles. **1** at spots and prevent spaces between the aerogel particles **1** from being filled with the adhesive **2.** Accordingly, it is possible to increase adhesion strength of the aerogel particles **1** and improve thermal insulating properties by suppressing formation of thermal bridges by the adhesive **2.**

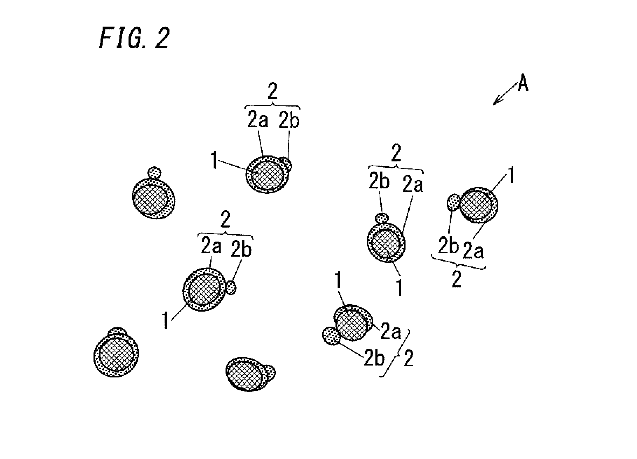

**FIG. 2** illustrates an example of the aerogel-containing particle **A.** The aerogel particle **1** is used as a core particle of the aerogel-containing particle **A.** In this specification, a core particle is defined as a particle functioning as a core of the aerogel-containing particle **A**. Note that the aerogel-containing particle **A** includes the aerogel particle **1** as a main component, and therefore the aerogel-containing particle **A** can be treated as is the case with the aerogel particle 1. Accordingly, the aerogel-containing particle A may be considered as the aerogel particle.

In the aerogel-containing particles A illustrated in **FIG.** 2, the aerogel particles **1** are covered with the layers of the layer-forming adhesive **2a,** and the particles of the particle-forming adhesive **2b** adhere to the aerogel particles **1.** The layer-forming adhesive **2a** and the particle-forming adhesive **2b** may be referred to as coating material. Note that the aerogel particles 1 are coated with the layers of the layer-forming adhesive **2a** and the particles of the particle-forming adhesive **2b.**

The layer-forming adhesive **2a** can function to increase strength of the aerogel particles 1. The particle-forming adhesive **2b** can function to improve adhesiveness of the aerogel particles 1. Therefore, it is possible to obtain the aerogel-containing particle A which is excellent in strength and adhesiveness.

In the process of conventional molding by use of aerogel particles, adhesive and aerogel particles (nano-porous particles) are merely mixed before press molding and subsequently hot press molding is performed. In this process, it is necessary to mix a relatively large amount of adhesive for the purpose of bonding aerogel particles with adhesive, and increased adhesive possibly causes decrease in thermal insulating properties. Further, when the amount of adhesive is decreased, that possibly causes adhesion failure and decrease in strength. In contrast, the aerogel-containing particle is constituted by the aerogel particle (core particle) to which adhesive is attached, and therefore even when adhesive is not mixed during molding, it is possible to bond the aerogel particles with the adhesive on the surfaces of the aerogel particles. Therefore, it is possible to bond the aerogel particles with a relatively small amount of adhesive and decrease in thermal insulating properties can be suppressed. Further, adhesive component covering the aerogel particles can increase strength of the aerogel particles. As a result, handleability of the aerogel particles can be improved, and molded products having increased strength can be obtained.

Since aerogel particles are brittle, conventionally, the aerogel particles are liable to be broken even with small force during handling, in molding by thermal curing and even after molding. Therefore, conventional aerogel particles are poor in handleability and products formed by molding the conventional aerogel particles have poor strength. In contrast, the aerogel-containing particle is formed by forming, as a base layer of particle-like coating, the layer of the adhesive mainly for reinforcing the aerogel particle to keep a shape of the aerogel particle and by thereafter forming the particle of the adhesive. By doing so, it is possible to effectively improve strength and adhesiveness. As a result, the aerogel-containing particle is excellent in moldability and can increase strength of products formed by molding the aerogel-containing particle. So called multi coating is performed on the aerogel particles.

Performing of the multi coating can include a plurality of steps. In the aspect as shown in FIG. 2, for example, two-step coating can be performed. The two-step coating can be performed by performing layer-like coating mainly for the purpose of reinforcing by a stirring method, and by, after drying, performing particle-like coating mainly for the purpose of bonding by a spray method. By doing so, two kinds of adhesive 2 (coating material) different from each other in a bonding way exist and the multi coating constituted by the layer-like coating and the particle-like coating can be completed. It is confirmed that molded products formed by use of the aerogel-containing particle A includes two kinds of adhesive 2 different from each other in a bonding way. Coating by use of the layer-forming adhesive **2a** is defined as layer-like coating, and adherence of the particle-forming adhesive 2b is defined as particle-like coating.

Each of the layer-forming adhesive **2a** and the particle-forming adhesive 2b may partially or entirely cover the aerogel particle serving as a core particle, and covered area of the aerogel particle is not limited particularly. FIG. 2 illustrates the aerogel-containing particle A in which the layer of the layer-forming adhesive **2a** covers whole of the aerogel particle **1** and the particle of the particle-forming adhesive **2b** adheres to the layer of the layer-forming adhesive **2a.** **FIG. 2** also illustrates the aerogel-containing particle **A** in which the layer of the layer-forming adhesive **2a** covers part of the aerogel particle **1,** and the particle of the particle-forming adhesive **2b** directly adheres to part of the aerogel particle **1** which is not covered with the layer-forming adhesive **2a.** In addition, **FIG. 2** also illustrates the aerogel-containing particle **A** in which the layer of the layer-forming adhesive **2a** covers part of the aerogel particle **1**, and the particle of the particle-forming adhesive **2b** adheres to the layer of the layer-forming adhesive **2a** partially covering the aerogel particle **1.** In each of the aerogel-containing particles **A** shown in **FIG. 2****,** one particle of the particle-forming adhesive **2b** adheres to one aerogel particle **1.** However, a plurality of particles of the particle-forming adhesive **2b** may adhere to one aerogel particle **1.** In that case, the aerogel-containing particle **A** may include the particles of the particle-forming adhesive **2b** respectively adhering to the aerogel particle **1** and the layer of the layer-forming adhesive **2a.** That is, the aerogel-containing particle **A** may include the particle of the particle-forming adhesive **2b** adhering to the surface of the aerogel particle 1 and the particle of the particle-forming adhesive **2b** adhering to the surface of the layer of the layer-forming adhesive **2a.** Alternatively, the aerogel-containing particle **A** may include the plurality of particles of the particle-forming adhesive **2b** adhering to either one of the aerogel particle **1** and the layer of the layer-forming adhesive **2a.** Further, the plurality of particles of the particle-forming adhesive **2b** may cover the aerogel particle **1** so as to surround the aerogel particle **1.**

In a preferred aspect of the aerogel-containing particle **A,** the particle of the particle-forming adhesive **2b** adheres to the surface of the layer of the particle-forming adhesive **2b.** In that case, at the time of molding, the plurality of aerogel particles **1** are bonded with two kinds of the adhesive **2,** the layer-forming adhesive **2a** and the particle-forming adhesive **2b** and, as a result, adhesiveness and strength can be further improved.

A method for preparing the aerogel-containing particle A is explained.

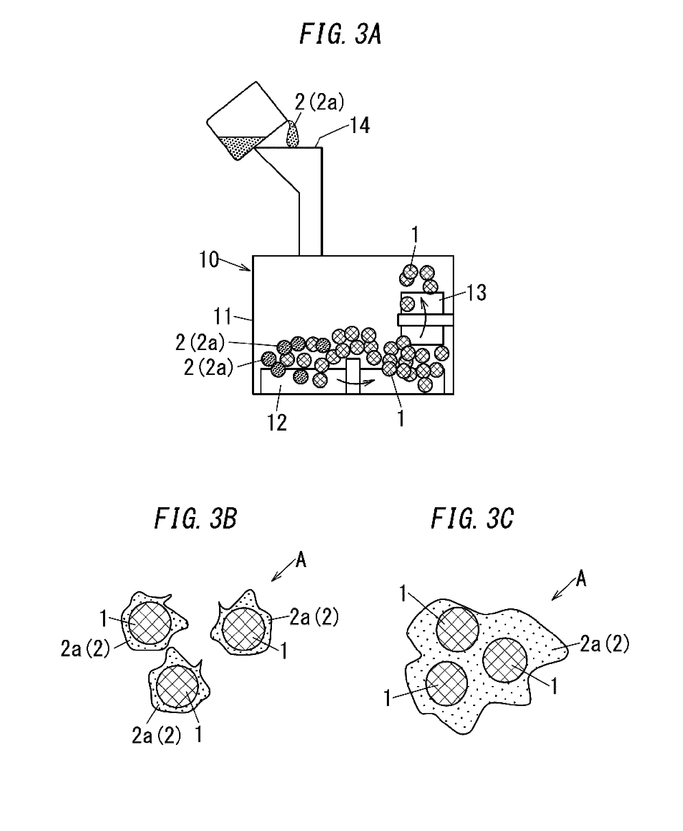

**FIG. 3A** illustrates an example of coating of the aerogel particles **1.** In this example, the aerogel particles **1** are stirred, and solution of the adhesive **2** is added to the stirred aerogel particles **1** little by little such that the adhesive **2** adheres to and covers the aerogel particles **1,** and thereby the aerogel particles **1** coated with the adhesive **2** can be prepared. This way enables easy preparation of the aerogel particles **1** covered with the layers of the layer-forming adhesive **2a.** Under conditions that the particles of the adhesive **2** can be attached, it is possible to prepare the aerogel particles **1** to which the particles of the particle-forming adhesive **2b** are attached.

As shown in **FIG. 3A****,** in this example, a liquid-added type powder stirring machine **10** is used. The powder stirring machine **10** includes, in a stirring tank **11,** a horizontal stirring blade **12** to rotate in a horizontal plane and a vertical stirring blade **13** to rotate in a vertical plane. A Vertical Granulator can be used as the powder stirring machine **10.** Simultaneous rotating of both the horizontal stirring blade **11** and the vertical stirring blade **12** can cause blade rotating and cross-screw rotating. Accordingly, effective stirring and stable coating can be achieved.

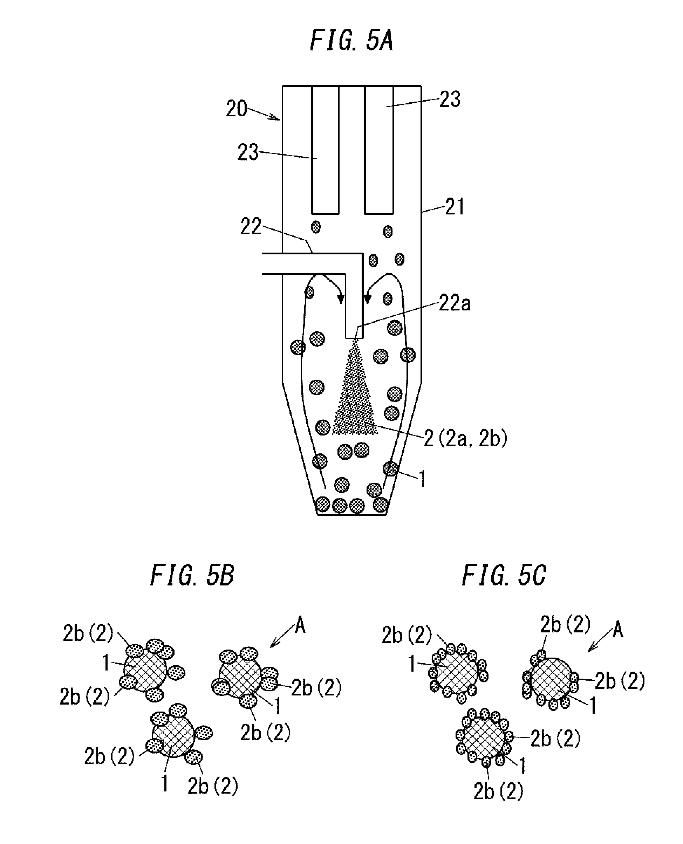

For performing coating, first, the aerogel particles **1** are put in the stirring tank **11** of the powder stirring machine **10.** Next, by activating the vertical stirring blade **12** and the vertical stirring blade **13,** the aerogel particles **1** are stirred. Thereafter, solution of the adhesive **2** is put in the stirring tank **11** through a liquid slot **14** situated above and is added to the stirred aerogel particles **1** little by little. In this way, the adhesive **2** is attached to the surfaces of the aerogel particles **1** while the aerogel particles **1** are being stirred. Further, stirring is continued until the adhesive **2** and the aerogel particles **1** are mixed almost homogeneously. Thereafter, by transferring the mixture to a fluidized bed and drying the mixture, it is possible to obtain the aerogel particles **1** covered with the layers of the layer-forming adhesive **2a.** Note that a fluidized powder stirring machine **20** as shown in **FIG. 5A** may be used as the fluidized bed for drying.

In this respect, when the solution of the adhesive **2** has a high density, as shown in **FIG. 3B****,** it is possible to easily obtain the aerogel particles **1** each of which is covered with the layer of the layer-forming adhesive **2a.** In contrast, when the solution of the adhesive **2** has a low density, as shown in **FIG. 3C****,** obtained are the aerogel particles **1** each set of the plurality of which is covered with the layer of the layer-forming adhesive **2a,** that is, granulated bodies. Such aerogel granulated bodies can be used for molding. However, from the view point of enhancement of thermal insulating properties, it is preferable that each of the aerogel particles **1** be solely covered by the layer of the layer-forming adhesive **2a** as shown in **FIG. 3B****,** but not that plurality of aerogel particles **1** are together covered with the layer of the layer-forming adhesive **2a.** Note that the aerogel granulated bodies of the aerogel particles **1** as shown in **FIG. 3C** may be mixed with the aerogel particles **1** as shown in **FIG. 3B****.**

In the powder stirring machine **10** of the aspect shown in **FIG. 3A****,** coating can be controlled by changing the number of revolutions of the blade, the number of revolutions of the cross screw, the concentration of the coating solution or the like, as a main parameter.

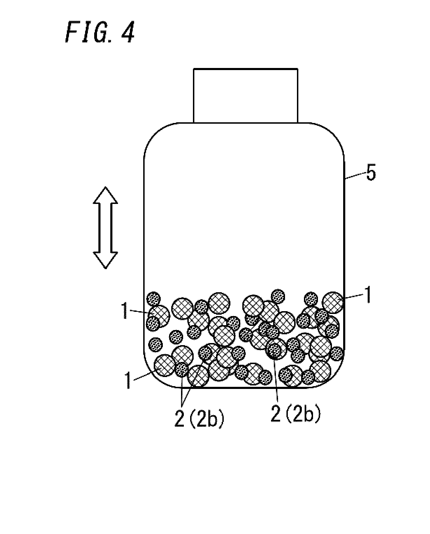

**FIG. 4** shows an example of coating of the aerogel particles **1.** In this example, it is possible to, by mixing the aerogel particles **1** and the adhesive **2** in powder form, prepare the aerogel particles **1** to which the adhesive **2** is attached. The adhesive **2** in powder form may be solid. This way enables coating of the particles of the adhesive **2** and accordingly easy preparation of the aerogel particles **1** to which the particles of the particle-forming adhesive **2b** are attached. When conditions are set up so as to be able to attach the layers of the adhesive **2,** it is also possible to prepare the aerogel particles **1** covered with the layers of the layer-forming adhesive **2a.**

First, the aerogel particles **1** and the adhesive **2** in powder form are put in a bottle 5. Preferably, the aerogel particles **1** covered with the layers of the layer-forming adhesive **2a** are used. In **FIG. 4****,** the layers of the layer-forming adhesive **2a** are not shown and, however, the aerogel particles **1** may be covered with the layers of the layer-forming adhesive **2a.** It is preferable that an average particle size (dimension) of the adhesive **2** be less than an average particle size (dimension) of the aerogel particles **1.** That can facilitate attachment of the particles of the adhesive **2** to the aerogel particles **1.** Next, the bottle **5** is sealed off by, for example, closing a lid thereof and is shaken. By doing so, the aerogel particles **1** and the adhesive **2** in powder form are mixed in powder level, and accordingly it is possible to obtain the aerogel particles **1** to which the particle-forming adhesive **2b** is attached. Such powder mixing enables attachment of the adhesive **2** in powder form to the aerogel particles **1** and accordingly enables attachment of the particles of the adhesive **2** to the aerogel particles **1.** Further, in a case where the adhesive **2** in solid form is used, gaps are likely to be formed between the particles of the particle-forming adhesive **2b** when the particle-forming adhesive **2b** is attached to the aerogel particles **1,** and thereby it becomes easy to perform coating without closing fine holes in the aerogel structure. In the manufacturing stage, they can be mixed in powder level by use of an appropriate powder mixer such as a mill and a mixer. However, since the particles are possibly destroyed with a strong stirring force, it is preferable that they be mixed by such a stirring force that does not cause particle destruction.

By combining the coating shown in **FIG. 3** and the coating shown in **FIG. 4****,** it is possible to obtain the aerogel-containing particles **A** in which the aerogel particles **1** are covered with the layers of the layer-forming adhesive **2a** and the particles of the particle-forming adhesive **2b** are attached to the aerogel particles **1.**

It is optional whether to firstly perform coating with the layer-forming adhesive **2a** or attachment of the particle-forming adhesive **2b.** For example, attachment of the particle-forming adhesive **2b** can be performed after covering with the layer-forming adhesive **2a.** Alternatively, covering with the layer-forming adhesive **2a** can be performed after attachment of the particle-forming adhesive **2b.** However, for bonding the aerogel particles 1 at spots, it is preferable that attachment of the particle-forming adhesive **2b** be performed after covering with the layer-forming adhesive **2a.**

**FIG. 5A** illustrates another example of coating of the aerogel particles **1.** In this example, the aerogel particles **1** are stirred, and solution of the adhesive **2** is added little by little to the stirred aerogel particles **1** such that the adhesive **2** adheres to and covers the aerogel particles **1,** and thereby the aerogel particles 1 can be prepared. This way is different from the aspect shown in **FIG. 3A** in that addition of liquid with spray and drying are performed in parallel. This way enables both layer-like coating and particle-like coating by adjusting conditions.

As shown in **FIG. 5A****,** in this example, used is the air pressure fluidized powder stirring machine **20.** The powder stirring machine **20** includes a nozzle **22** opening downward in a substantially tubular fluidized bottle **21.** The nozzle **22** extends into the fluidized bottle **21** from a side part of the fluidized bottle **21** and bends downward in a substantially vertical direction at the substantially center of the fluidized bottle **21** in a horizontal direction such that the tip **22a** of the nozzle **22** faces downward. The nozzle **22** is connected to an air sending mechanism constituted by a pump or the like and the tip **22a** of the nozzle **22** serves as an outlet. Further, there is a gas-liquid mixing mechanism which is disposed at part of the nozzle **22** closer to the air sending mechanism and is to mix air and the solution of the adhesive **2,** such that air obtained by nebulizing the solution of the adhesive **2** can spray out through the tip **22a.** Switchable are sending of wet air containing the solution of the adhesive **2** and sending of dry air not containing the solution of the adhesive **2.** It is preferable that sent air be heated air. There are filters **23** which are disposed in the upper part of the fluidized bottle **21** and are configured to let air inside the fluidized bottle **21** flow out through the filters **23** such that pressure inside the fluidized bottle **21** becomes appropriate. With the powder stirring machine **20,** addition of the solution of the adhesive **2** by a spray method and drying can be performed in parallel, and accordingly the adhesive **2** can adhere to the core particles **1** through a small contact area. Therefore, it becomes easy to attach the particles of the adhesive **2.** Further, with the powder stirring machine **20,** addition of the solution of the adhesive **2** by a spray method and drying can be performed in parallel, and accordingly it is also easy to attach the layers of the adhesive **2.** As mentioned above, with the powder stirring machine **20,** it is possible to perform covering with the layer-forming adhesive **2a** and attachment of the particle-forming adhesive **2b.** As a result, the aerogel-containing particle A can be easily prepared.

For performing coating, first, the aerogel particles **1** are put in the fluidized bottle **21** of the powder stirring machine **20.** Next, air flows downward from the tip of the nozzle **22,** and the aerogel particles **1** are stirred by being blown up by the air. In this respect, the air is preferably heated air. In a state where the aerogel particles **1** are being stirred, misty air containing the solution of the adhesive **2** flows from the nozzle **22.** In this manner, the adhesive **2** is added to the aerogel particles **1** little by little and simultaneously drying is performed, and thereby the adhesive **2** is attached to the surfaces of the aerogel particles **1** so as to cover the aerogel particles **1.** Further, addition of the adhesive **2** by spraying is continued until amount of coating reaches a desired amount, and thereby it is possible to obtain the aerogel particles **1** which are covered with the layers of the adhesive **2** or are attached the particles of the adhesive **2** to.

In the case of performing particle-like coating, that is, attaching of the particles of the particle-forming adhesive **2b,** dispersion liquid of the adhesive **2** in powder form may be used. It is preferable that the adhesive **2** in powder form is not dissolved in solvent. Use of the dispersion liquid of the adhesive **2** in powder form can facilitate attachment of the particles of the adhesive **2.**

In this respect, in a case where the particles of the adhesive **2** are attached, when the solution of the adhesive **2** has a high density, as shown in **FIG. 5B****,** it is possible to easily obtain the aerogel particles 1 the surface of each of which is attached the relatively large-size particle of the adhesive **2** to. In contrast, when the solution of the adhesive **2** has a low density, as shown in **FIG. 5C****,** it is possible to easily obtain the aerogel particles **1** the surface of each of which is attached the relatively small-size particle of the adhesive **2** to. Note that, in **FIGS. 5B** and **5C****,** the layer-forming adhesive **2a** is not shown, and however the aerogel particles **1** may be covered with the layers of the layer-forming adhesive **2a.**

In the powder stirring machine **20** of the aspect shown in **FIG. 5A****,** coating can be controlled by changing charge air temperature, air volume, spraying speed, mist liquid concentration (coating solution concentration) or the like, as a main parameter. In accordance with control of coating, the layers or the particles of the adhesive **2** are formed. It is preferable that, after forming the layers of the adhesive **2** on the aerogel particles **1,** the particles of the adhesive **2** be attached to the aerogel particles **1.**

The above-mentioned coating methods can be used alone or in combination for forming the aerogel-containing particle A. For example, multi coating can be performed by coating with a vertical granulator and thereafter coating by a spray method.

Next, a method for producing the aerogel molded body **B** is explained.

A method for producing the aerogel molded body **B** includes an aerogel-containing particle preparation step and an aerogel particle bonding step. The aerogel-containing particle preparation step is to coat the aerogel particles **1** with the layer-forming adhesive **2a** and to attach the particle-forming adhesive **2b** to the aerogel particles **1.** The aerogel particle bonding step is to bond the aerogel particles **1** with the adhesive **2** by heating the plurality of aerogel-containing particles **A** at a temperature which does not cause spreading of the particle-forming adhesive **2b.** By using this method, it is possible to easily obtain the aerogel molded body **B** which has increased strength and is excellent in thermal insulating properties.

The aerogel-containing particle preparation step can be performed by preparation of the above-mentioned aerogel-containing particle **A.** The aerogel particle bonding step can be performed by molding the aerogel-containing particle **A.**

**FIGS. 6A** to **6D** illustrate an example of a method for molding the aerogel-containing particle **A.** By this method, it is possible to obtain the aerogel molded body **B** molded by bonding the aerogel particles **1** with the adhesive 2. The aerogel molded body **B** is useful as a thermal insulator. Note that, in **FIGS. 6A** to **6D****,** the adhesive **2** is omitted, and however the aerogel-containing particle **A** formed by attaching the adhesive **2** to the surfaces of the aerogel particles **1** is used. **A** pressing machine **30** is used for molding. The pressing machine **30** is constituted by a lower press mold **31** and an upper press mold **32.**

First, as shown in **FIG. 6A****,** side wall molds **31b** are attached to the lower press mold **31** to form a recess **31a** and thereafter a release sheet **34** is put on the bottom of the recess **31a,** and a surface sheet **4** is put on the release sheet **34.** Next, the aerogel particles **1** are transferred from the bottle **5** to the recess **31a** situated on the lower press mold **31.** It is preferable that the lower press mold 31 be preheated equal to or less than curing temperature of the adhesive **2** by heat. Next, as shown in **FIG. 6B****,** a surface of the aerogel particles **1** in the recess **31a** is flattened with a flattening tool **33** such as a medicine spoon and a spatula. Next, the surface sheet **4** is put on the flattened surface of the aerogel-containing particles **A** and further the release sheet **34** is put on the surface sheet **4.** Further, as shown in **FIG. 6C****,** the upper press mold **32** is put into the recess **31a** from above and pressing is performed by applying heat and pressure. It is preferable that the pressing is performed by a pressing pressure which does not cause crash and break of the aerogel particles **1.** By the pressing, the adhesive **2** exerts adhesiveness and the aerogel particles **1** are bonded to each other to be unified. Further, the surface sheet **4** and the aerogel particles **1** are bonded by adhesiveness of the adhesive 2, and as a result the surface sheet **4** and a molded product of the aerogel particles **1** are unified. After the pressing, the molded product is taken out and dried with a dryer. In this manner, as shown in **FIG. 6D****,** formed is the aerogel molded body **B** (thermal insulator) constituted by the molded product (aerogel layer 3) of the aerogel particles **1** and the surface sheet **4.** Note that for enhancement of adhesiveness of the surface sheet **4** and the aerogel layer **3,** adhesive may be attached to the interface between the not cured aerogel layer **3** and the surface sheet **4.**

Molding by application of heat and pressure is performed so that the particles of the particle-forming adhesive **2b** do not spread, but maintain the shape thereof. When the particles of the particle-forming adhesive **2b** spread, there is a possibility that the particles of particle-forming adhesive **2b** are combined linearly and heat bridges are formed. The particles of the particle-forming adhesive **2b** are allowed to spread to the extent that the shape of the particles is maintained, and may expand.

In a case where the particle-forming adhesive **2b** is powder containing thermosetting resin, it is preferable that the adhesive **2** in powder form have such properties that the adhesive **2** in a molten state is repelled by a surface of the aerogel particle **A.** Thereby, it is possible to suppress spread of the particles of the particle-forming adhesive **2b.** Further, the particle-forming adhesive **2b** in powder form is cured after being molten by heat on the surfaces of the aerogel particles **1.** Simultaneously, the layer-forming adhesive **2a** is also cured. Thereby, it is possible to bond the plurality of aerogel particles **1** with the particles of the particle-forming adhesive **2b** which are cured.

In a case where the particle-forming adhesive **2b** is powder containing thermoplastic resin, it is preferable that the adhesive **2** in powder form be attached to the surfaces of the aerogel particles **1** and the adhesive **2** in powder form be heated at a temperature which is higher than a softening point of thermoplastic resin and is lower than a melting point of thermoplastic resin. Thereby, it is possible to soften the adhesive **2** in powder form on the surfaces of the aerogel particles **1** and suppress spread of the particle-forming adhesive **2b.** Thereafter, they are cooled to a temperature lower than the softening point of the thermoplastic resin, and thereby the plurality of the aerogel particles **1** are bonded with the particles of the solidified adhesive material **2. Note** that, when the layer-forming adhesive **2a** is thermosetting resin, it is preferable that a temperature which is higher than a softening point of thermoplastic resin and lower than a melting point of thermoplastic resin be a curing temperature of thermosetting resin constituting the layer-forming adhesive **2a.**

In this aspect, the aerogel molded body **B** is formed as a board-like thermal insulator (thermal insulating board). Note that, by molding with a proper molding tool or the like, the aerogel molded body **B** can be formed into a shape other than a board shape. The aerogel molded body **B** has a structure in which the surface sheets **4** are respectively placed on opposites surfaces of the aerogel layer **3** formed of bonded aerogel particles **1.** By covering the aerogel with the surface sheet **4,** it is possible to increase strength of the aerogel molded body **B.** Examples of the surface sheet **4** include a resin sheet, a fiber sheet, a resin-containing fiber sheet and the like. In a case where the surface sheet **4** contains resin, when the surface sheet **4** and the aerogel layer **3** can be bonded to each other to be unified, it is possible to improve adhesiveness of the aerogel layer **3** and the surface sheet **4.** Note that the surface sheet **4** may be placed on only one surface of the aerogel layer **3.** Alternatively, the aerogel molded body **B** may be constituted by the aerogel layer **3** on which the surface sheet **4** is not placed. However, for increase of strength, it is preferable that the surface sheets **4** be placed on opposite surfaces of the aerogel layer **3.**

The aerogel molded body **B** formed in this way is available as a thermal insulator, excellent in thermal insulating properties and strength, and useful as building material or the like.

### EXAMPLES

### (Preparation of aerogel-containing particles)

Into a stirring bottle in which silica aerogel particles (average particle size D50: 694 µm) are stirred, liquid adhesive of a solution of water-soluble phenolic resin adhesive (molecular weight of about 180) which is equal to about 5% of total cubic volume of the aerogel particles was added, stirred for five minutes and dried. In this way, obtained were silica aerogel particles covered with the layer-forming adhesive. Further, by mixing in powder level the silica aerogel particles and powdery adhesive of phenolic resin adhesive (molecular weight of about 550), particle-forming adhesive was attached to the aerogel particles. As a result, obtained were silica aerogel-containing particles in which the silica aerogel particles were covered with the layer-forming adhesive, and particle-forming adhesive was attached to the silica aerogel particles.

In Examples and Comparative Examples, the liquid adhesive was water-soluble phenolic resin adhesive, and the powdery adhesive was phenolic resin adhesive in powder form, and the aerogel-containing particle was prepared at the ratio by mass of solid contents shown below. The liquid adhesive serves as the layer-forming adhesive and powder adhesive serves as the particle-forming adhesive.
Example 1: 75% by mass of liquid adhesive and 25% by mass of powdery adhesive
Example 2: 50% by mass of liquid adhesive and 50% by mass of powdery adhesive
Example 3: 25% by mass of liquid adhesive and 75% by mass of powdery adhesive
Comparative Example 1: 100% by mass of liquid adhesive and 0% by mass of powder adhesive
Comparative Example 2: 0% by mass of liquid adhesive and 100% by mass of powdery adhesive
Note that, examples to 3 and comparative examples 1 and 2 have the same total amount of adhesive.

### (Producing of aerogel molded body)

Press molding was performed on the silica aerogel-containing particles obtained in the above way. The pressing was performed under such a condition that temperature was 180°C, pressure was 0.98 MPa (10 kgf/cm²) and time was twenty minutes. A board of the aerogel particles were formed by molding. As a result, the aerogel molded body was obtained as a board. The aerogel molded body had a length of 120 mm, a width of 120 mm and a thickness of 10 mm.

### (Evaluation)

Three-point bending strength and thermal conductivity of the aerogel molded body were measured.

The three-point bending strength was measured in such a manner that a board were placed on a base such that opposite ends of the board were in contact with the base, a center part of the board was pressed downward from the above with a crosshead while nothing exists under the center part, and the pressing was continued until the board was broken. Then, strength, deformation and elasticity were measured.

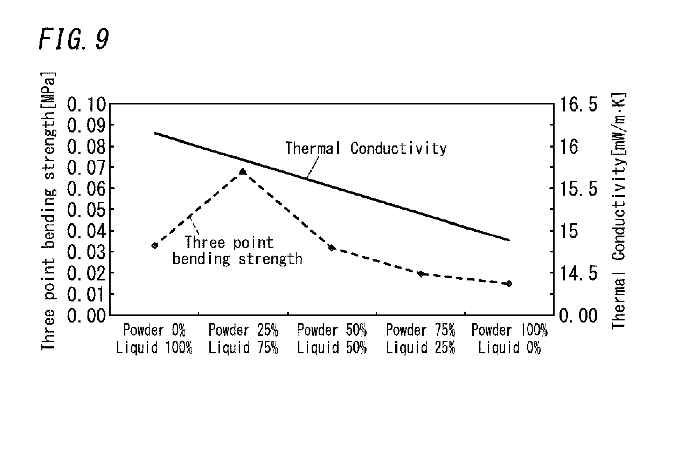

The result is shown in **FIG. 9****.** Note that "%" in **FIG. 9** means "% by mass". The thermal insulating properties increase with a decrease in the thermal conductivity.

**FIG. 9** shows that the thermal conductivity decreases with an increase in a ratio of the powdery adhesive. It is presumed that the reason is that, with an increase in the powder adhesive, a ratio of bonding of the aerogel particles **1** at spots increases, and formation of a heat bridge is suppressed. In a case where a mixture of the powdery adhesive and the liquid adhesive is used, three-point bending strength becomes high relative to a case where only either one of the powdery adhesive and liquid adhesive is used. Specifically, when 25% by mass of the powdery adhesive and 75% by mass of the liquid adhesive were used, the strength became maximum, and accordingly it was confirmed that there was a preferred range of a ration in mixture of the powdery adhesive and the liquid adhesive.

A relation between the thickness of the layer-forming adhesive and the thermal conductivity of the aerogel molded body, and a relation between the average particle size of the particle-forming adhesive and the thermal conductivity of the aerogel molded body can be analyzed. Analysis model was as follows. The aerogel-containing particle was formed into a cube of 1 mm side. It was presumed that the layer of the layer-forming adhesive was spread as a surface layer of the cube and had a uniform thickness. Further, it was also presumed that eight cubic particles of the particle-forming adhesive were respectively embedded in the eight corners of the cubic aerogel-containing particle. In the molded body, the cubes were arranged in a three dimension under a condition where the aerogel-containing particles were arranged and no air gap was present therebetween. In a case of multi-stacking, the cubic aerogel-containing particles were arranged such that the center of the bottom surface of each upper cubic aerogel-containing particle is located on an upper corner of the lower cubic aerogel-containing particle, by adjusting of positioning of the upper cubic aerogel-containing particle. The values of properties were set as follows.
Thermal conductivity of aerogel molded body: 0.016 W/mK
Density of aerogel molded body: 0.155 g/cm³
Cubic volume of aerogel molded body: 1089 cm³
Thermal conductivity of aerogel particle: 0.012 W/mK
Cubic volume of aerogel particle: 1070.8 cm³
Thermal conductivity of adhesive: 0.13 W/mK
Density of adhesive: 1.39 g/cm³
Cubic volume of adhesive: 18.2 cm³
Note that a ratio by volume of the aerogel particle to the adhesive was 0.9833:0.0167.

The above analysis led to a result that the thickness of the layer-forming adhesive in the aerogel particle in the form of a cube of 1 mm side was 2.8 µm, and in this case, the thermal conductivity of the aerogel molded body was 16.30 W/mK. Therefore, it is considered that, in the practical aerogel molded body, the layer-forming adhesive forms covering layers with a thickness close to the above value. Further, the above analysis led to a result that the average particle size (one side of cube) of the particle-forming adhesive in the aerogel particle in the form of a cube of 1 mm side is 127.8 µm, and in this case, the thermal conductivity of the aerogel molded body is 15.33 W/mK. Therefore, it is considered that, in the practical aerogel molded body, the particle-forming adhesive forms adhering particles with an average particle size close to the above value. Note that the adhesive is much smaller than the aerogel particles, and therefore the size of the aerogel-containing particles is approximated as the size of the aerogel particles.

With regard to the aerogel molded body prepared in the above manner, the internal structure thereof appearing as a result of breakage was observed with a digital microscope (optical microscope, 100-fold magnification).

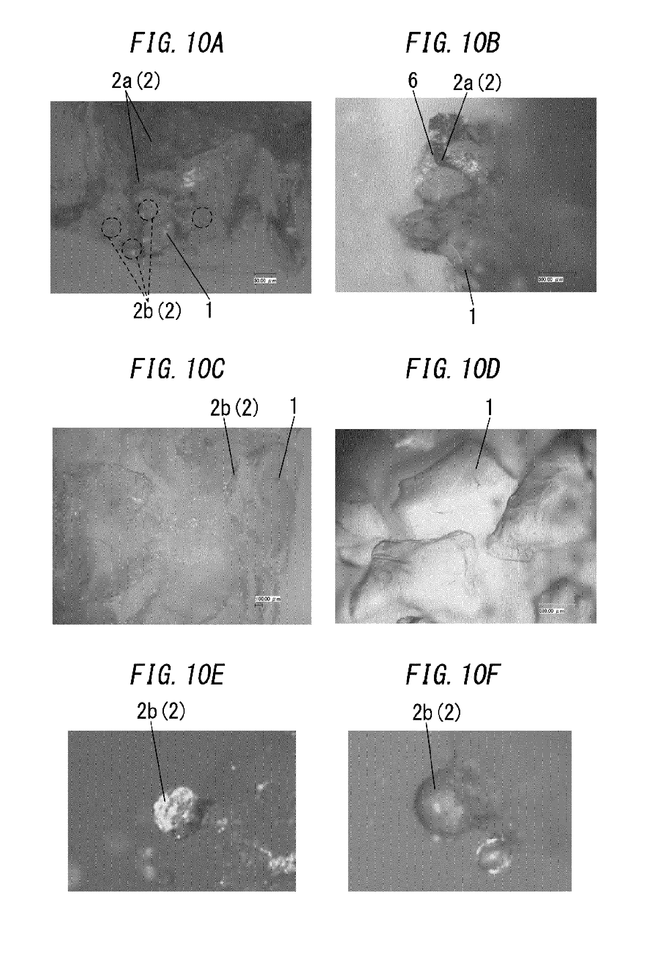

**FIGS. 10A** to **10F** are photographs showing observations with the optical microscope. **FIG. 10A** shows Example 1 (75% by mass of liquid adhesive, 25% by mass of powdery adhesive), **FIG. 10B** shows Comparative Example 1 (100% by mass of liquid adhesive), and **FIG. 10C** shows Comparative Example 2 (100% by mass of powder adhesive). For comparison, **FIG. 10D** shows the aerogel particles before molding. **FIGS. 10E** and **10F** are photographs of the particle of the powdery adhesive on the surface of the aerogel particle, and **FIG. 10E** shows the particle before molding and **FIG. 10F** shows the particle after molding.

As shown in **FIG. 10D****,** the aerogel particles **1** have indeterminate shapes. As shown in **FIG. 10B****,** with respect to the aerogel molded body **B** formed by use of the liquid adhesive (the layer-forming adhesive **2a),** it is observed that the layers of the adhesive **2** are formed on the surfaces of the aerogel particles **1** and that a large amount of the liquid adhesive adheres to the insides of the grooves **6** of the aerogel particles **1.** As shown in **FIG. 10C****,** with respect to the aerogel molded body **B** formed by use of the powdery adhesive, it is observed that the particles of the adhesive **2** (the particle-forming adhesive **2b)** adhere to the surfaces of the aerogel particles **1.** As shown in **FIGS. 10E** and **10F**, the particle-furming adhesive **2b** before molding is in powder form and the surface thereof is uneven. In contrast, the particle-forming adhesive **2b** is melted and thereafter cured in the process of molding, and therefore the surface thereof becomes even after molding. As shown in **FIG. 10A****,** with regard to the aerogel molded body formed by use of both of the liquid adhesive (the layer-forming adhesive **2a)** and the powder adhesive (the particle-forming adhesive **2b),** it is confirmed that the molded product having features of both types of adhesive is formed. Thereby, it is possible to obtain the aerogel molded body **B** (thermal insulator) which is excellent in strength and thermal insulating properties.

### REFERENCE SIGNS LIST

- A: Aerogel containing particle
- B: Aerogel molded body
- 1: Aerogel particle
- 2: Adhesive
- 2a: Layer-forming adhesive
- 2b: Particle-forming adhesive
- 3: Aerogel layer
- 4: Surface sheet
- 5: Battle
- 6: Groove

## Claims

1. An aerogel molded body comprising:
a plurality of aerogel particles; and
adhesive bonding the plurality of aerogel particles,
the adhesive including:
layers of layer-forming adhesive covering the plurality of aerogel particles; and
particles of particle-forming adhesive adhering to the plurality of aerogel particles.

2. The aerogel molded body according to claim 1, wherein:
the layer-forming adhesive is water-soluble adhesive; and
the particle-forming adhesive is powdery adhesive.

3. The aerogel molded body according to claim 1 or 2, wherein:
the layer-forming adhesive is water-soluble phenolic resin adhesive; and
the particle-forming adhesive is phenolic resin adhesive.

4. The aerogel molded body according to any one of claims **1** to 3, wherein
a ratio by mass of solid content of the layer-forming adhesive to solid content of the particle-forming adhesive (layer-forming adhesive: particle-forming adhesive) falls within a range of 4:1 to 3:2.

5. The aerogel molded body according to any one of claims 1 to 4, wherein:
the layers of the layer-forming adhesive have a thickness of **1** to 10 µm; and
the particles of the particle-forming adhesive have an average particle size of 10 to 500 µm.

6. An aerogel-containing particle for forming the aerogel molded body according to any one of claims **1** to **5,** comprising:
an aerogel particles;
at least one layer of layer-forming adhesive covering the aerogel particle; and
at least one particle of particle-forming adhesive adhering to the aerogel particle.

7. A method for producing the aerogel molded body according to any one of claims **1** to **5,** comprising:
an aerogel-containing particle preparation step of preparing a plurality of aerogel-containing particles by coating the plurality of aerogel particles with the layer-forming adhesive and attaching the particle-forming adhesive to the plurality of aerogel particles; and
an aerogel particle bonding step of bonding the plurality of aerogel particles with the adhesive by heating the plurality of aerogel-containing particles at a temperature which does not cause spreading of the particle-forming adhesive.
